# EUROPÄISCHE PATENTSCHRIFT

(11) **EP 2 368 285 B1**
(45) Veröffentlichungstag und Bekanntmachung des Hinweises auf die Patenterteilung: **24.10.2012**
(21) Anmeldenummer: 09799034.5
(22) Anmeldetag: 18.12.2009
(51) Int. Cl.: H01M 4/14, H01M 4/20

(54) **TEXTILES FLÄCHIGES MATERIAL FÜR EINE BATTERIEELEKTRODE**
LAMINAR TEXTILE MATERIAL FOR A BATTERY ELECTRODE
MATÉRIAU TEXTILE PLAT DESTINÉ À UNE ÉLECTRODE DE BATTERIE

(30) Priorität: 18.12.2008 DE 102008062765
(43) Veröffentlichungstag der Anmeldung: 28.09.2011
(73) Patentinhaber: VB Autobatterie GmbH & Co. KGaA, 30419 Hannover (DE)
(72) Erfinder: JOHNS, Frank, 31157 Sarstedt (DE)
(74) Vertreter: Günther, Constantin
(86) Internationale Anmeldenummer: PCT/EP2009/009130
(87) Internationale Veröffentlichungsnummer: WO 2010/078939

(56) Entgegenhaltungen:
- EP-A2- 1 241 720
- GB-A- 762 461
- GB-A- 1 362 662
- US-A- 5 348 817

## Beschreibung

Die Erfindung betrifft ein textiles flächiges Batterieelektrodenabdeckungsmaterial zur Abdeckung einer pastösen aktiven Masse auf einer ebenen plattenförmigen Batterieelektrode. Die Erfindung betrifft ferner eine ebene plattenförmige Batterieelektrode mit einem solchen Batterieelektrodenabdeckungsmaterial eine Batterie sowie ein Verfahren zur Herstellung von derartigen Batterieelektroden.

Es ist üblich, in Fahrzeugen Bleibatterien als aufladbare elektrische Energiespeicher bzw. konkret als Starterbatterien einzusetzen. In einer Bleibatterie sind üblicherweise positive und negative Elektroden sowie eine verdünnte Lösung aus Schwefelsäure als Elektrolyt vorgesehen. Die Elektroden sind jeweils mit einer aktiven Masse beschichtet. Als aktive Masse für eine positive Elektrode kann beispielsweise Bleidioxid verwendet werden, für die negative Elektrode beispielsweise schwammartiges Blei. Die aktive Masse wird in pastöser Form auf die plattenförmigen Elektroden aufgetragen.

Für eine stapelweise Lagerung der mit der pastösen aktiven Masse versehenen plattenförmigen Elektroden ist es erforderlich, ein Aneinanderhaften der Elektroden zu vermeiden. Die relativ empfindliche aktive Masse muss zudem mechanisch stabilisiert werden. Hierfür war es bisher üblich, auf die aktive Masse eine Abdeckschicht aus Papier aufzubringen. Die Verwendung von Papier als Abdeckschicht hat jedoch verschiedene Nachteile, unter anderem, dass sich die Cellulosefasern des Papiers im Betrieb der Batterie in der Schwefelsäure auflösen und damit nicht mehr für eine Stabilisierung der aktiven Masse beitragen können. Um diese Situation zu verbessern, wurde in der WO 03/007404 A1 vorgeschlagen, die Abdeckschicht aus einem Faservlies zu bilden, vorzugsweise aus einem Polyestervlies. Es hat sich jedoch in der Zwischenzeit gezeigt, dass ein solches Polyestervlies ebenfalls keine lange Haltbarkeit im Betrieb der Batterie aufweist. So kommt es z. B. in der Praxis gelegentlich vor, dass die Batterie überladen wird. Hierbei können relativ hohe Temperaturen auftreten, was in Folge des sich dabei bildenden Sauerstoffs an der positiven Elektrode zu einer Zerstörung des Polyestervlieses führt. Das Polyestervlies löst sich dabei auf, was zur Folge hat, dass die Polyesterfasern im flüssigen Elektrolyten aufschwimmen. Zusammen mit an den Fasern haftenden Verunreinigungen können sich elektrisch leitende Brücken bilden, die zum Kurzschluss zwischen den positiven und negativen Elektroden und somit zum Ausfall der Batterie führen können. Es gab auch bereits den Vorschlag, z. B. WO 98/01914 A1, die aktive Masse der Elektroden mit Mikroglasfaser zu beschichten. Hier hat sich jedoch gezeigt, dass die Vliese aus Glasfasern eine zu offene Struktur aufwiesen, durch die sich die pastöse aktive Masse hindurchquetschen konnte, was zu einer Verschmutzung des Elektrolyten und damit zum Ausfall der Batterie führt. Zudem hat sich das Glasfaservlies auf Grund seiner Welligkeit und mangelnden Reißfestigkeit im nassen Zustand als problematisch erwiesen. Aus diesem Grund hat sich die Verwendung von Glasfaservlies In der Praxis ebenfalls nicht bewährt.

Aus der GB 762,461 gehen Vorschläge für eine Beschichtung poröser Streifen oder Platten hervor. Aus der US 5,348,817 geht eine bipolare Bleisäurebatterie hervor, bei der zwischen Elektrodenplatten Separatoren vorgesehen sind. Aus der EP 1 241 720 A2 geht ein Verfahren zum Herstellen kontinuierlich beschichteter Elektroden auf einem porösen Stromkollektor sowie entsprechende Batteriezellen hervor. Aus der GB 1 362 662 gehen elektrische Batterien mit sogenannten "Lamina-Type"-Zellen hervor.

Der Erfindung liegt die Aufgabe zugrunde, Möglichkeiten zur Verbesserung von Bleibatterien anzugeben, die praxistauglicher sind und die pastöse aktive Masse auf den Batterieelektroden sicherer stabilisieren. Diese Aufgabe wird durch das in dem Patentanspruch 1 angegebene Batterieelektrodenabdeckungsmaterial gelöst. Ferner wird die Aufgabe durch eine Batterieelektrode gemäß Anspruch 7, eine Batterie gemäß Anspruch 9 und ein Verfahren gemäß Anspruch 13 gelöst. Die Unteransprüche geben vorteilhafte Ausgestaltungen der Erfindung an.

Die vorliegende Erfindung betrifft das Gebiet der Batterien mit ebenen, plattenförmigen Batterieelektroden. Solche Batterieelektroden weisen einen Rahmen aus dem Elektrodenmaterial sowie ein darin aus dem Elektrodenmaterial hergestelltes Gitter auf. Auf eine solche Batterieelektrode wird eine pastöse, aktive Masse aufgebracht. Batterien mit derart aufgebauten Elektroden werden insbesondere als Starterbatterien für Fahrzeuge eingesetzt. Im Gegensatz beispielsweise zu Batterien, die sog. Röhrenelektroden aufweisen, deren Aufbau beispielsweise in der DE 36 436 43 C2 beschrieben ist, und die insbesondere als Traktionsbatterien für Elektrofahrzeuge Verwendung finden können, besteht bei plattenförmigen Batterieelektroden im Rahmen der Herstellung von Batterien ein Bedarf, diese aufeinander gestapelt zu lagern. Ein solcher Bedarf besteht beispielsweise bei den erwähnten Röhrenelektroden nicht, da bei diesen keine stapelbaren Lagerung erfolgt und diese einen generell anderen Aufbau aufweisen, z. B. kein Gitter enthalten.

Die Erfindung hat den Vorteil, die pastöse aktive Masse in der Batterie mechanisch zu stabilisieren und ein Abschwemmen der Masse in den Elektrolyten zu verhindern. Hierdurch ist es möglich, zyklenfeste Batterien mit einer langen Haltbarkeit herzustellen. Durch Verwendung des erfindungsgemäßen Batterieelektrodenabdeckungsmaterial mit einer Mischung von Glasfasern und Fasern aus einem thermoplastischen Kunststoff ist eine Haltbarkeit einer daraus gebildeten Abdeckschicht der pastösen aktiven Masse über die gesamte Batterielebensdauer gegeben. Hierdurch kann insbesondere auf ein Aufbringen einer zusätzlichen Schicht von Papier verzichtet werden. Das erfindungsgemäße Batterieelektrodenabdeckungsmaterial zur Abdeckung der pastösen aktiven Masse ist auch während des Herstellungsprozesses der Elektroden, d. h. beim Aufbringen auf die Batterieelektrode, mechanisch erheblich stabiler als die vorbekannten Materialien. Es lässt sich problemlos auf der Batterieelektrode fixieren und schneiden. Auch ein Stapeln der vorgefertigten Batterieelektroden ist nun ohne Beschädigung des erfindungsgemäßen Materials möglich, insbesondere erfolgt kein Hindurchquetschen von aktiver Masse durch die Abdeckschicht. Auch nach einem Lagerprozess der vorgefertigten Batterieelektroden zeigt das erfindungsgemäße Material eine im Vergleich zu den vorbekannten Materialien verbesserte Adhäsion auf der Batterieelektrode. Auch im Betrieb der mit der erfindungsgemäßen Batterieelektrode ausgestatteten Batterie kommt es nicht zum Zerfall des erfindungsgemäßen textilen flächigen Materials, wie etwa bei den vorbekannten Materialien. Daher ist eine Stabilität der Abdeckschicht über die Batterielebensdauer gewährleistet. Auch im Formationsprozess löst sich das erfindungsgemäße textile flächige Material nicht auf.

Gemäß einer vorteilhaften Weiterbildung der Erfindung werden als Fasern aus dem thermoplastischen Kunststoff Polyesterfasern verwendet. Hierdurch ist eine kostengünstige Herstellung des textilen Materials möglich. Zudem sind Polyesterfasern leicht erhältlich. Gemäß einer vorteilhaften Weiterbildung der Erfindung sind die Glasfasern und/oder die Fasern aus dem thermoplastischen Kunststoff feinfaserig ausgebildet. Es ist insbesondere Vorteilhaft, wenn die Fasern einen Durchmesser von weniger als 6 µm aufweisen. Hierdurch kann eine relativ feinfaserige Textilstruktur realisiert werden und somit ein Durchtreten (Durchquetschen) der pastösen aktiven Masse durch das Textilmaterial vermieden werden. Gemäß der Erfindung haben die Fasern aus dem thermoplastischen Kunststoff einen Gewichtsanteil von 5 bis 25 Prozent an dem Material. Es hat sich gezeigt, dass hiermit eine besondere Robustheit des erfindungsgemäßen Materials erzielt werden kann. Gemäß einer vorteilhaften Weiterbildung der Erfindung wird dem textilen Material neben den Glasfasern und den Fasern aus dem thermoplastischen Kunststoff ein Bindemittel zur Verfestigung der Fasern beigegeben. Hierdurch kann die mechanische Stabilität und Dauerfestigkeit des Materials weiter erhöht werden.

Gemäß einer vorteilhaften Weiterbildung der Erfindung ist als Bindemittel ein säurebeständiges Mittel, insbesondere Acrylatbinder, vorgesehen. Hierdurch wird die Dauerfestigkeit des des Materials weiter erhöht.

Gemäß einer vorteilhaften Weiterbildung der Erfindung hat das Bindemittel einen Gewichtsanteil von 5 bis 25 Prozent an dem Material. Das erfindungsgemäße textile Material besteht hinsichtlich seiner weiteren Anteile aus den Glasfasern und gegebenenfalls weiteren Additiven. Vorteilhaft wird der überwiegende Gewichtsanteil von den Glasfasern gebildet. Gemäß einer vorteilhaften Weiterbildung der Erfindung kann das erfindungsgemäße textile Material aus der Mischung von Glasfasern und Fasern aus einem thermoplastischen Kunststoff, mit oder ohne das Bindemittel, bestehen.

Das erfindungsgemäße textile flächige Material eignet sich für den Anwendungszweck zur Beschichtung von Batterieelektroden insbesondere in Materialdicken von 0,2 bis 0,3 mm, z.B. 0,25 mm.

Gemäß einer vorteilhaften Weiterbildung weist eine ebene, plattenförmige Batterieelektrode ein in einem Rahmen angeordnetes ebenes Elektroden-Gitter auf, wobei das Elektroden-Gitter mit einer pastösen, aktiven Masse beschichtet ist und auf der aktiven Masse eine Abdeckschicht aus einem textilen, flächigen Material nach einem der vorhergehenden Ansprüche aufgebracht ist.

Gemäß einer vorteilhaften Weiterbildung der Erfindung weist eine Batterie wenigstens zwei Elektroden auf, auf deren pastöse aktive Masse eine Abdeckschicht des erfindungsgemäßen Materials aufgebracht wurde. Zwischen den Elektroden ist zur Isolierung der Elektroden gegeneinander ferner ein Separator vorgesehen, der in einer vorteilhaften Ausgestaltung Glasfasern aufweist. Der Separator kann auch vollständig aus Glasfasern bestehen. Durch den Glasfaser-Anteil in dem erfindungsgemäßen textilen flächigen Material der Abdeckschicht kann ein synergetischer Effekt dahingehend erzielt werden, dass der Kontakt zwischen der Abdeckschicht und dem Separator im Vergleich zu vorbekannten Materialien für die Abdeckschicht verbessert wird, wodurch der Kontakt der Elektroden mit dem Elektrolyten verbessert wird. Hierdurch kann der Wirkungsgrad der Batterie gesteigert werden.

Die Erfindung wird nachfolgend anhand von Ausführungsbeispielen unter Verwendung von Zeichnungen näher erläutert.

Es zeigen
- Figur 1: eine Schnittansicht einer Batterie und
- Figur 2: eine Seitenansicht einer Batterieelektrode und
- Figur 3: einen Herstellprozess für Elektroden und
- Figur 4: eine Schnittdarstellung einer Elektrode.

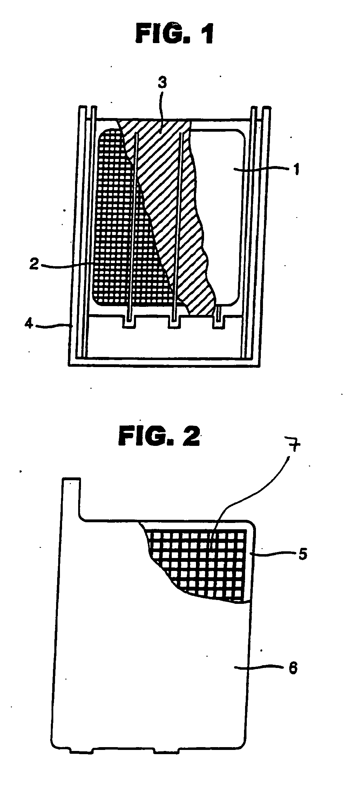

Die in Figur 1 dargestellte Batterie weist eine Mehrzahl positiver Elektroden 1 und negativer Elektroden 2 auf. Die Elektroden 1, 2 sind jeweils mit einer pastösen aktiven Masse beschichtet. Zwischen den Elektroden 1, 2 ist ein isolierender Separator 3 vorgesehen. Die Elektroden 1, 2 und der Separator 3 sind in einem Batteriegehäuse 4 angeordnet, in das zum Abschluss der Fertigung der Batterie der flüssige Elektrolyt, beispielsweise die Schwefelsäure, eingefüllt wird. Wie aus Figur 2 erkennbar, besteht eine Elektrode aus einer gitterartigen Struktur 7 mit einem Rahmen 5. Die Elektrode wird beispielsweise aus Blei in einem Gieß- oder Stanzverfahren hergestellt. Auf das Bleimaterial der Elektrode wird im Herstellprozess das aktive Material in Form einer Paste aufgetragen. Auf das aktive Material wird die Abdeckschicht 6 aufgebracht. Hierfür können die eingangs erwähnten bekannten Materialien verwendet werden.

Das textile flächige Material gemäß der Erfindung weist Glasfasern und Fasern aus dem thermoplastischen Kunststoff, z. B. Polyesterfasern, auf. Vorteilhaft wird dabei eine Mischung der Glasfasern und Fasern aus dem thermoplastischen Kunststoff hergestellt. Die Fasern können in jeglicher Form miteinander vernetzt sein. Das Material kann aus einem Verbund von Fasern in jeglicher Form bestehen, beispielsweise als Vlies, Gewebe, Gewirk oder Gestrick. Je nach Textilstruktur kann auch vorteilhaft ein Garn verwendet werden, das Fasern aus Glasfasern und aus dem thermoplastischen Kunststoff aufweist.

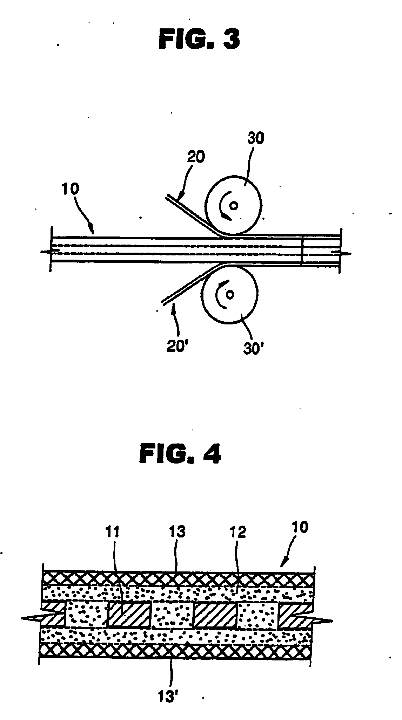

In der Figur 3 ist dargestellt, wie auf vorteilhafte Weise die erfindungsgemäße Elektrode mit der Abdeckschicht aus dem textilen flächigen Material hergestellt werden kann. Hierfür wird zunächst ein bandförmiges Elektrodenmaterial (Elektrodenband) 10 hergestellt, das eine gitterförmige Struktur aufweist. Das Elektrodenband 10 kann unter Verwendung von Herstellschritten wie Gießen, Walzen und/oder Stanzen in die gewünschte, in der Figur 2 dargestellte Form gebracht werden. Das Elektrodenband 10 wird sodann in einer Maschine durch Druckwalzen 30 und 30' geführt. Die Druckwalzen 30, 30' pressen ein ebenfalls bandförmiges, von einer Vorratsrolle abgerolltes textiles flächiges Material 20, 20', das Glasfasern und Polyesterfasern aufweist, beidseitig auf das Elektrodenband 10. Schließlich werden die einzelnen Elektrodenplatten aus dem Elektrodenband abgeteilt, z. B. mittels einer Stanzmaschine.

In der Figur 4 ist eine gemäß dem zuvor erläuterten Verfahren gefertigte Batterieelektrode im Querschnitt ausschnittsweise dargestellt. Wie erkennbar ist, sind Gitterstäbe 11 der Bleielektrode 10 beidseitig mit der pastösen aktiven Masse 12 bedeckt. Die aktive Masse 12 befindet sich dabei auch in den Hohlräumen des Gitters. Auf der aktiven Masse 12 befindet sich beidseitig jeweils eine Abdeckschicht 13, die Glasfasern und Polyesterfasern aufweist.

## Patentansprüche

1. Textiles, flächiges Batterieelektrodenabdeckungsmaterial zur Abdeckung einer pastösen, aktiven Masse (12) auf einer ebenen, plattenförmigen Batterieelektrode (1, 2), die ein in einem Rahmen (5) angeordnetes Gitter (7) aus dem Elektrodenmaterial aufweist, **dadurch gekennzeichnet, dass** das textile, flächige Batterieelektrodenabdeckungsmaterial eine Mischung von Glasfasern und Fasern aus einem thermoplastischen Kunststoff aufweist und die Fasern aus dem thermoplastischen Kunststoff einen Gewichtsanteil von 5 bis 25 Prozent haben.

2. Batterieelektrodenabdeckungsmaterial nach Anspruch 1, **dadurch gekennzeichnet, dass** die Glasfasern und/oder die Fasern aus dem thermoplastischen Kunststoff feinfaserig ausgebildet sind, insbesondere einen Durchmesser von weniger als 6 µm aufweisen.

3. Batterieelektrodenabdeckungsmaterial nach wenigstens einem der vorhergehenden Ansprüche, **dadurch gekennzeichnet, dass** als Fasern aus dem thermoplastischen Kunststoff Polyesterfasern verwendet werden.

4. Material nach wenigstens einem der vorhergehenden Ansprüche, **dadurch gekennzeichnet, dass** ein Bindemittel zur Verfestigung der Fasern vorgesehen ist.

5. Batterieelektrodenabdeckungsmaterial nach Anspruch 4, **dadurch gekennzeichnet, dass** als Bindemittel ein säurebeständiges Mittel, insbesondere Acrylatbinder, vorgesehen ist.

6. Batterieelektrodenabdeckungsmaterial nach Anspruch 4 oder 5, **dadurch gekennzeichnet, dass** das Bindemittel einen Gewichtsanteil von 5 bis 25 Prozent hat.

7. Ebene, plattenförmige Batterieelektrode, die ein in einem Rahmen (5) angeordnetes ebenes Elektroden-Gitter (7) aufweist, wobei das Elektroden-Gitter (7) mit einer pastösen, aktiven Masse (12) beschichtet ist und auf der aktiven Masse (12) eine Abdeckschicht (6, 13, 20, 20') aus einem textilen, flächigen Batterieelektrodenabdeckungsmaterial nach einem der vorhergehenden Ansprüche aufgebracht ist.

8. Batterieelektrode nach Anspruch 7, **gekennzeichnet durch** eine Ausführung als Bleielektrode.

9. Batterie mit wenigstens einer Elektrode (1, 2) nach einem der Ansprüche 7 oder 8, insbesondere Starterbatterie für ein Fahrzeug.

10. Batterie nach Anspruch 9, **dadurch gekennzeichnet, dass** als Elektrolyt flüssige Säure, insbesondere Schwefelsäure, verwendet wird.

11. Batterie nach Anspruch 9 oder 10, **dadurch gekennzeichnet, dass** wenigstens zwei Elektroden (1, 2) vorgesehen sind, zwischen denen ein Separator (3) vorgesehen ist.

12. Batterie nach Anspruch 11, **dadurch gekennzeichnet, dass** der Separator (3) Glasfasern aufweist.

13. Verfahren zur Herstellung von ebenen, plattenförmigen Elektroden für Batterien mit den Schritten:
- Formen eines Elektrodenbandes (10) mit Rahmen (5) und darin angeordneter gitterförmiger Struktur (7),
- Beschichten der Oberflächen des Elektrodenbandes (10) mit einer pastösen aktiven Masse (12),
- Aufbringen einer Abdeckschicht (6, 13, 20, 20') aus einem Batterieelektrodenabdeckungsmaterial nach wenigstens einem der Ansprüche 1 bis 6 auf die pastöse Masse (12),
- Verpressen der Abdeckschicht (6, 13, 20, 20') und der pastösen Masse (12) mit dem Elektrodenband (10),
- Abteilen von Elektroden (1, 2) aus dem Elektrodenband (10).

## Claims

1. A textile sheetlike battery electrode covering material for covering a pasty active mass (12) on a planar, plate-shaped battery electrode (1, 2) which includes a grid (7) of the electrode material, arranged in a frame (5), **characterized in that** the textile sheetlike battery electrode covering material comprises a mixture of glass fibers and fibers composed of a thermoplastic polymer, wherein the fibers composed of a thermoplastic polymer have a weight fraction of 5 to 25 percent.

2. The material according to claim 1, **characterized in that** the glass fibers and/or the fibers composed of a thermoplastic polymer are finely fibrous, more particularly have a diameter of less than 6 µm.

3. The material according to either or both of the preceding claims, **characterized in that** polyester fibers are used as fibers composed of a thermoplastic polymer.

4. The material according to one or more of the preceding claims, **characterized in that** a binder is provided to consolidate the fibers.

5. The material according to claim 4, **characterized in that** an acid-resistant binder and more particularly an acrylate binder is provided as the binder.

6. The material according to claim 4 or 5, **characterized in that** the binder has a weight fraction of 5 to 25 percent.

7. A planar, plate-shaped battery electrode including a planar electrode grid (7) arranged in a frame (5), wherein the electrode grid (7) is coated with a pasty active mass (12) and the active mass (12) is covered with a covering layer (6, 13, 20 20') of a textile sheetlike battery electrode covering material according to any preceding claim.

8. The battery electrode according to claim 7, **characterized by** an implementation as a lead electrode.

9. A battery comprising at least one electrode (1, 2) according to either of claims 7 and 8, more particularly a starter battery for a vehicle.

10. The battery according to claim 9, **characterized in that** a liquid acid, more particularly sulphuric acid, is used as electrolyte.

11. The battery according to claim 9 or 10, **characterized in that** there are provided at least two electrodes (1, 2) wherebetween a separator (3) is provided.

12. The battery according to claim 11, **characterized in that** the separator (3) includes glass fibers.

13. A process for producing planar, plate-shaped electrodes for batteries comprising the steps of:
- forming an electrode strip (10) with frames (5) and therein arranged grid-shaped structure (7),
- coating the surfaces of the electrode strip (10) with a pasty active mass (12),
- applying a covering layer (6, 13, 20, 20') of a battery electrode covering material according to one or more of claims 1 to 6 to the pasty mass (12),
- press molding the covering layer (6, 13, 20, 20') and the pasty mass (12) together with the electrode strip (10),
- dividing electrodes (1, 2) off the electrode strip (10).

## Revendications

1. Matériau textile plat de recouvrement d'électrode de batterie destiné à recouvrir une pâte active (12) prévue sur une électrode (1, 2) en forme de plaque d'une batterie qui présente une grille (7) en matériau d'électrode disposée dans un cadre (5),
**caractérisé en ce que**
le matériau textile plat de recouvrement d'électrode de batterie présente un mélange de fibres de verre et de fibres en matériau thermoplastique et **en ce que** les fibres en matériau thermoplastique représentent une fraction pondérale de 5 à 25 pour cent.

2. Matériau textile plat de recouvrement d'électrode de batterie selon la revendication 1, **caractérisé en ce que** les fibres de verre et/ou les fibres en matériau thermoplastique sont de fines fibres dont le diamètre est en particulier inférieur à 6 µm.

3. Matériau textile plat de recouvrement d'électrode de batterie selon au moins l'une des revendications précédentes, **caractérisé en ce que** les fibres en matériau thermoplastique sont des fibres de polyester.

4. Matériau selon au moins l'une des revendications précédentes, **caractérisé en ce qu'**il présente un liant qui solidifie les fibres.

5. Matériau textile plat de recouvrement d'électrode de batterie selon la revendication 4, **caractérisé en ce que** le liant prévu est un agent résistant aux acides et en particulier un liant acrylate.

6. Matériau textile plat de recouvrement d'électrode de batterie selon les revendications 4 ou 5, **caractérisé en ce que** le liant représente une fraction pondérale de 5 à 25 pour cent.

7. Electrode en forme de plaque plane pour une batterie, l'électrode présentant une grille plane (7) d'électrode disposée dans un cadre (5), la grille (7) d'électrode étant revêtue d'une pâte active (12) et une couche de recouvrement (6, 13, 20, 20') en un matériau textile plat de recouvrement d'électrode de batterie selon l'une des revendications précédentes étant appliquée sur la pâte active (12).

8. Electrode de batterie selon la revendication 7, **caractérisée en ce qu'**elle est configurée comme électrode au plomb.

9. Batterie, en particulier batterie de démarrage pour véhicule, présentant au moins une électrode (1, 2) selon l'une des revendications 7 ou 8.

10. Batterie selon la revendication 9, **caractérisée en ce qu'**elle utilise comme électrolyte un acide liquide, notamment l'acide sulfurique.

11. Batterie selon les revendications 9 ou 10, **caractérisée en ce qu'**elle présente au moins deux électrodes (1, 2) entre lesquelles un séparateur (3) est prévu.

12. Batterie selon la revendication 11, **caractérisée en ce que** le séparateur (3) présente des fibres de verre.

13. Procédé de fabrication d'électrodes en forme de plaques planes pour batterie, le procédé présentant les étapes qui consistent à :
former un ruban d'électrode (10) doté d'un cadre (5) dans lequel est disposée une structure (7) en forme de grille,
revêtir la surface du ruban d'électrode (10) par une pâte active (12),
appliquer une couche de recouvrement (6, 13, 20, 20') en un matériau textile plat de recouvrement d'électrode de batterie selon l'une des revendications 1 à 6 sur la pâte active (12),
repousser la couche de recouvrement (6, 13, 20, 20') et la pâte active (12) sur le ruban d'électrode (10) et
découper des électrodes (1, 2) dans le ruban d'électrode (10).
